# EUROPÄISCHE PATENTSCHRIFT

(11) **EP 0 970 000 B1**
(45) Veröffentlichungstag und Bekanntmachung des Hinweises auf die Patenterteilung: **29.08.2001**
(21) Anmeldenummer: 98919172.1
(22) Anmeldetag: 27.03.1998
(51) Int. Cl.: B62D 15/02

(54) **LENKWINKELSENSORSYSTEM MIT ERHÖHTER REDUNDANZ**
STEERING ANGLE SENSOR SYSTEM WITH ENHANCED REDUNDANCY
SYSTEME DE CAPTEUR D'ANGLE DE BRAQUAGE A REDONDANCE ACCRUE

(30) Priorität: 27.03.1997 DE 19712869
(43) Veröffentlichungstag der Anmeldung: 12.01.2000
(73) Patentinhaber: Valeo Schalter und Sensoren GmbH, 74321 Bietigheim-Bissingen (DE)
(72) Erfinder: BENZ, Jürgen, D-74354 Besigheim (DE); HEHL, Thomas, D-74321 Bietigheim-Bissingen (DE)
(74) Vertreter: Dreiss, Fuhlendorf, Steimle & Becker
(86) Internationale Anmeldenummer: EP9801817
(87) Internationale Veröffentlichungsnummer: WO9843867

(56) Entgegenhaltungen:
- EP-A- 0 377 097
- DE-A- 4 207 719
- DE-A- 4 215 630
- DE-A- 4 221 186
- DE-A- 4 409 892
- DE-A- 19 506 938
- DE-A- 19 532 903
- US-A- 5 008 823
- US-A- 5 201 380

## Beschreibung

Die Erfindung betrifft ein Lenkwinkelsensorsystem, bei der der Lenkwinkel eines Fahrzeugs festgestellt und einem übergeordneten System als Eingangssignal zur Verfügung gestellt wird, gemäß dem Oberbegriff des Anspruchs 1.

Als Lenkwinkel ist hier in erster Linie die Winkelstellung des Lenkrads und damit des Lenkstocks eines Kraftfahrzeugs zu verstehen. Dieser Lenkwinkel ist wieder eng gekoppelt mit der Winkelstellung der steuernden Vorderräder des Fahrzeugs. Da diese Winkelstellung wiederum ein wesentlicher Parameter für die Regelung der Fahrdynamik ist, haben Lenkwinkelsensoren eine wichtige Funktion bei der Fahrdynamikregelung von Kraftfahrzeugen erlangt. Ein derartiger Lenkwinkelsensor ist beispielsweise in der DE-A-195 32 903 beschrieben. Bei diesem vorgeschlagenen Lenkwinkelsensor sind mehrere Spuren vorgesehen, durch deren parallele Auswertung sich der jeweilige Lenkwinkel recht genau angeben läßt. Treten bei dem beschriebenen Lenkwinkelsensor Fehlmessungen auf, so wird die nachgeschaltete Fahrdynamikregelung abgeschaltet, so daß sich das Fahrzeug ebenso steuern läßt, wie ein Fahrzeug, welches keine Fahrdynamikregelung besitzt. Es gibt Überlegungen, den Lenkwinkelsensor auch zur Einstellung der Winkelstellung der Fahrzeugräder einzusetzen (Steer by Wire). Dabei wird der Winkel des Lenkrades festgestellt und durch einen örtlichen Antrieb im Bereich der lenkenden Räder zur Einstellung von deren Winkelstellung ausgewertet. Die mechanische Kopplung von Lenkrad und Vorderräder entfällt dabei. Der Ausfall der Lenkung stellt ein erheblich größeres Unfallrisiko als der Ausfall der Fahrdynamikregelung eines Fahrzeugs dar.

Aus der US-A-5,201,380 ist eine redundante Steuerung für eine Sensorlenkung bekannt geworden. Dabei sind an der Lenksäule zwei bzw. drei Potentiometer befestigt, über die die Winkelstellung der Lenksäule und somit des Lenkrades ermittelt wird. Dabei erfassen die Potentiometer sich überlappende Winkelbereiche, so daß zum einen eine volle Umdrehung des Lenkrades ermittelt werden kann, zum anderen keine Lücken innerhalb einer vollen Umdrehung bestehen. Die Potentiometer sind derart mit einer Steuereinheit verbunden, daß sie redundant arbeiten. Fällt einer der Sensoren aus, dann übernehmen die restlichen beiden Sensoren die Aufgabe, die Winkellage der Lenksäule festzustellen. Der Aufwand für ein derartiges System ist jedoch relativ hoch, da jeder Sensor einen Sensorkopf und ein abzutastendes Gegenstück aufweist.

Aus der DE-A1-42 07 719 ist eine Fremdkraft-Lenkanlage für Kraftfahrzeuge bekannt geworden, bei der die Lenkkraft ausschließlich von einer Energiequelle, die nicht die menschliche Muskelkraft ist, aufgebracht wird. Diese Vorrichtung weist einen ersten Lenkwinkelsensor auf, der die Winkelstellung der Lenkspindel erfasst. Mit einem zweiten Sensor wird die Stellung eines Getrieberades innerhalb der Lenkanlage ermittelt. Auch bei dieser Vorrichtung ist der bauliche Aufwand relativ groß, da beide Sensoren auf unterschiedliche Geber zurückgreifen.

Die Erfindung geht daher aus von einem Lenkwinkelsensorsystem, wie es aus der US-A-5,201,380 bekannt ist. Aufgabe der Erfindung ist es, ein derartiges System erheblich stärker gegen Fehlfunktionen abzusichern, als dies bei den bekannten Lenkwinkelsensorsystemen der Fall ist, und einen geringeren baulichen Aufwand besitzt.

Die Aufgabe wird durch ein Lenkwinkelsensorsystem gelöst, das die Merkmale des Anspruchs 1 aufweist.

Die Erfindung besteht im Prinzip also darin, zumindest wirkungsmäßig zwei parallel arbeitende Sensoren vorzusehen, wobei zumindest einer auf seine fehlerfreie Arbeitsweise überprüft wird, wobei beim Feststellen von Fehlern das Ausgangssignal des Sensorsystems durch die Meßergebnisse des anderen Sensors bestimmt wird. Dabei kann die Fehlerüberprüfung durch Plausibilitätsüberprüfungen nur der Signale eines einzigen Sensors vorgenommen werden. Es können aber auch gemäß Anspruch 1 zwei Sensoren voneinander getrennt durch voneinander unabhängige Fehlerüberwachungsverfahren auf ihre Fehlerfreiheit überprüft werden. Das hat den Vorteil, daß beim Auftreten eines Fehlers an einem der beiden Sensoren der Fehler sofort gemeldet werden kann, auch dann, wenn der Fehler an dem Stand-by-Sensor und nicht an dem gerade ausgewerteten Sensor auftritt.

Eine weitere Möglichkeit besteht darin, die Winkelsignale beider Sensoren parallel auszuwerten und miteinander zu vergleichen. Auch hier läßt sich durch festgestellte Differenzen in den Meßergebnissen der beiden Sensoren relativ schnell auf einen Fehler schließen. Bei der Verwendung von drei Sensoren ist die Wahrscheinlichkeit groß, daß die zwei übereinstimmende Ergebnisse liefernden Sensoren fehlerfrei arbeiten. Besitzt man nur zwei Sensoren, so wird man durch Fehlersuchstrategien an dem oder den einzelnen Sensoren feststellen, welcher der beiden Sensoren nicht ordnungsgemäß arbeitet.

Die Sensoren werden ortsfest gehalten und die Markierungsträger drehen sich in Abhängigkeit von der Drehung des Lenkstocks bzw. Lenkrads. Der Vorteil besteht im wesentlichen darin, daß die Stromversorgung der Sensorköpfe erheblich vereinfacht wird, während die Markierungen auf dem Markierungsträger in der Regel nicht mit Energie versorgt werden müssen.

Mindestens zwei Sensorköpfe tasten um einen vorgegebenen Winkel versetzt die gleiche Markierungsspur ab, so daß bei Fehlerfreiheit die Meßergebnisse um einen vorgegebenen Winkelbetrag abweichen müssen. Dieser Betrag läßt sich bei der Verarbeitung in der Steuereinheit ohne Schwierigkeiten berücksichtigen, so daß die Meßergebnisse der Sensorköpfe ohne weiteres miteinander verglichen und zum Feststellen von Fehlern ausgewertet werden können. Als Vorteil ergibt sich dabei, daß der Markierungsträger sehr viel kleiner ausgestaltet sein kann und daß die Meßergebnisse der beiden Sensorköpfe sehr viel leichter miteinander vergleichbar sind.

Die beiden Sensoren arbeiten nicht mit der gleichen Genauigkeit. Der Vorteil ist, daß der Sensor mit der größeren Auflösung der Meßergebnisse so lange ständig hinsichtlich des nachgeordneten Systems ausgewertet wird, bis seine Fehlerhaftigkeit feststeht. Erst dann wird die Auswertung auf den weniger genau arbeitenden Sensor umgeschaltet, so daß in diesem Fall immer noch, wenn auch weniger genaue Meßergebnisse des Lenkwinkels vorliegen. Vorteilhaft ist dabei, daß der Ersatzsensor erheblich preiswerter sein kann als der Hauptsensor.

Die unterschiedliche Genauigkeit in der Messung der einzelnen Sensoren kann auch auf Merkmalen beruhen, wie sie in Anspruch 3 aufgeführt sind. Danach arbeiten die einzelnen Sensoren nach unterschiedlichen physikalischen Meßprinzipien. Der Vorteil hierbei besteht darin, daß bei Auftreten bestimmter Störeinflüsse in der Regel nur ein bestimmtes physikalisches Meßprinzip betroffen ist. So ist beispielsweise bei Verschmutzung zu befürchten, daß ein optisch arbeitender Sensor fehlerhaft arbeitet. Dies gilt aber dann nicht für einen auf einem magnetischen Meßprinzip parallel arbeitenden Sensor. Während nun die Sensoren selbst mit Fehlersuchstrategien ausgerüstet werden können, empfiehlt sich in Weiterbildung der Erfindung die Merkmalskombination nach Anspruch 4. Danach wird die Überwachung auf Fehler neben der Auswertung der Winkelmeßsignale auch gleichzeitig von der gemeinsamen Steuereinheit übernommen. Ein Vorteil hierzu besteht insbesondere darin, daß auch Fehler mitbewertet werden, die auf dem Übertragungsweg zwischen Sensor und Steuereinheit auftreten können.

Für das Meßverfahren der einzelnen Sensorköpfe empfehlen sich eine Reihe von Meßverfahren, wobei diese bei der Verwendung mehrerer Sensorköpfe derart miteinander kombiniert werden können, daß einzelnen Sensorköpfen unterschiedliche Meßverfahren zugeordnet werden. Es versteht sich, daß die Markierungen auf dem Markierungsträger dem jeweiligen Meßverfahren des zugehörigen Sensors angepaßt sein müssen. Dabei sind hinsichtlich der anzuwendenden Meßverfahren insbesondere optische und magnetische Verfahren zu empfehlen. Es können aber auch ohmische Verfahren verwendet werden, bei denen eine Widerstandsspur abgetastet wird, wobei der fließende Strom der Länge der Spur und damit der Winkelstellung des Markierungsträgers entspricht. Selbstverständlich muß dabei dafür gesorgt werden, daß der Widerstand auch mit der Zunahme des Lenkwinkels stetig ansteigt, was durch eine entsprechende Unterbrechung einer ggf. kreisförmigen Spur an geeigneter Stelle erreicht wird. Es sind aber auch andere Verfahren denkbar und ggf. in Kombination anwendbar, wie beispielsweise induktive Meßverfahren oder kapazitive.

Bei dem induktiven Verfahren werden in der Regel sogenannte Resolver eingesetzt.

Um die Auswertung zu vereinfachen, empfiehlt sich in Weiterbildung der Erfindung die Merkmalskombination nach Anspruch 6. Dabei können beispielsweise die Winkelsignale der nach gleichem Meßprinzip arbeitenden Sensoren im Zeitmultiplex mit den gleichen Verarbeitungsmitteln in der Steuereinrichtung ausgewertet werden. Mechanisch ergibt sich dadurch eine Vereinfachung, daß nicht mehrere Markierungsträger notwendig sind, sondern nur ein einziger mehreren Sensorköpfen zugeordnet ist.

Als praktikabel hat sich insbesondere die Verwendung von Sensorköpfen gemäß der Merkmalskombination nach Anspruch 7 erwiesen.

Speziell bei der Messung des Umdrehungswinkels des Lenkrads ergibt sich das Problem, daß mit Hilfe der bekannten Sensorköpfe der absolute Winkel einer einzigen Umdrehung des Lenkrads also von 360 Grad relativ einfach gemessen werden kann.

Es ist aber zu berücksichtigen, daß dabei noch nicht die Anfangsstellung des Lenkrades beim Einschalten der Messung bekannt ist und daher die Meßergebnisse mehrdeutig sind. Setzt sich dabei der insgesamt mögliche Drehwinkel des Lenkrades aus mehreren Umdrehungen zusammen, so ist somit unklar, auf welche Umdrehung sich der gemessene Winkelwert bezieht. Hier kann in vorteilhafter Weiterbildung der Erfindung eine Merkmalskombination nach Anspruch 11 Abhilfe schaffen, indem eine gesonderte Einrichtung vorgesehen wird, die zur Feststellung der bereits zurückgelegten Umdrehungen bzw. der beim Einschalten des Systems eingenommenen Umdrehung dient. Hierzu kann beispielsweise ein Schrittschaltwerk dienen, wie er in der DE-OS 196 01 965.5 (P 8636) beschrieben ist. Dieses Schrittschaltwerk zählt ausschließlich die zurückgelegten Umdrehungen in beiden Richtungen. Eine andere Möglichkeit beschreibt die Merkmalskombination der vorliegenden Anmeldung nach Anspruch 8, indem die abgetastete Markierung sich über mehrere Umdrehungen erstreckt. Diese einzelnen Umdrehungen können ringförmig ineinander verschachtelt sein, können aber auch spiralenförmig ineinander übergehen, wie dies bereits im Zusammenhang mit der DE-OS 196 38 911.9 (P 8781) erläutert wurde. Es ist aber auch ein Sensor denkbar, welcher in radialer Richtung gegenüber den tangential abgetasteten Codespuren verschiebbar ist, wobei die Radialbewegung von der gerade abgetasteten Umdrehung des Lenkrades abhängt. Wählt man einen zusätzlichen Sensor, dessen Markierungsträger in seiner Umdrehungsgeschwindigkeit gegenüber der Umdrehungsgeschwindigkeit des Lenkstocks um einen gewissen Faktor durch ein Getriebe herabgestuft ist, so empfiehlt sich in Weiterbildung die Merkmalskombination nach Anspruch 9. Bei der Herunterstufung des Getriebes ist darauf zu achten, daß die Umdrehungsgeschwindigkeit des Markierungsträgers gegenüber der Umdrehungsgeschwindigkeit des Lenkstocks so niedrig sein muß, daß nach dem Zurücklegen aller Umdrehungen durch den Lenkstock der Markierungsträger nur eine einzige Umdrehung zurücklegen darf. Es versteht sich, daß bei einem derart großen zu messenden Winkelbereich in der Regel die gemessene Winkelgenauigkeit geringer sein wird. Dabei kann sich empfehlen, ein gegenüber den anderen Markierungsträgern abgeändertes Meßsystem anzuwenden, wie es beispielsweise in der Verwendung einer Widerstandsspur (Ohm'sches Meßprinzip) gegeben ist, welche durch den Sensorkopf abgetastet wird. Die Größe des gemessenen Winkels bestimmt sich danach aus der durch den Sensorkopf abgetasteten Spannung bzw. des über den Sensorkopf fließenden Stromes. Dies hängt davon ab, welche Punkte des Meßsystems mit der Betriebsspannung beaufschlagt werden.

Ein Ausführungsbeispiel der Erfindung wird nachfolgend anhand der Zeichnung erläutert. Darin zeigt:
- Fig. 1: in skizzierter Form ein Lenkwinkelsensorsystem mit zwei Markierungsträgern, von denen der eine mittels zweier Sensorköpfe und der zweite mittels eines Sensorkopfes abgetastet wird und
- Fig. 2: ein Prinzipschaltbild der Verarbeitung der Winkelsignale der Sensorköpfe.

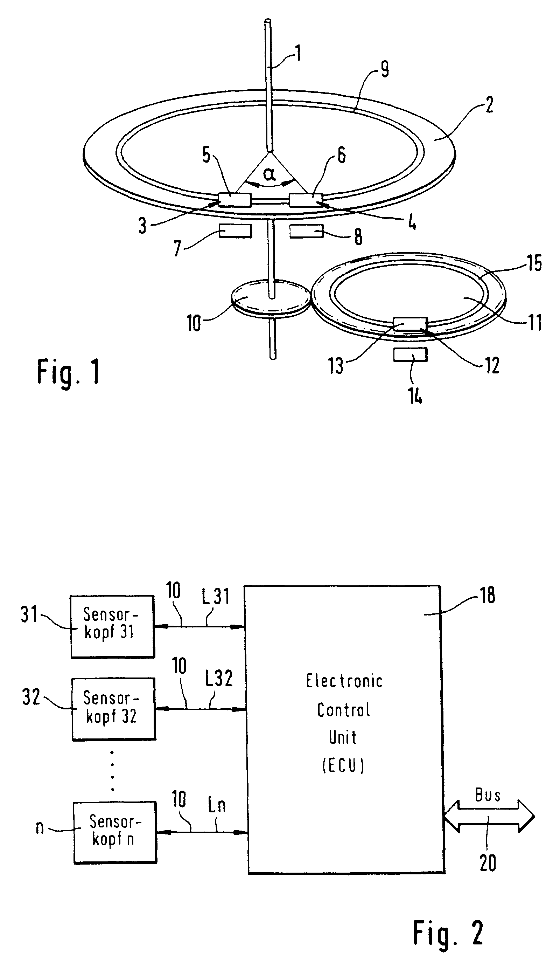

In Fig. 1 ist schematisch ein Lenkstock 1 angedeutet, welcher gleichzeitig die Lenkachse der Fahrzeuglenkung bildet. Das am oberen Ende des Lenkstocks 1 starr befestigte Lenkrad ist in Fig. 1 nicht dargestellt. Ein mit dem Lenkstock 1 starr gekoppelter kreisförmiger flacher Markierungsträger 2 trägt eine in sich geschlossene kreisförmige Codespur 9, die von zwei Sensorköpfen 3,4 abgetastet wird. Zu den Sensorköpfen 3 und 4 gehören jeweils eine Leseeinrichtung 5,6 in Form einer CCD-Zeile und Lichtquellen 7,8, die den Markierungsträger 2 im Bereich der Leseeinrichtungen 5,6 von unten anstrahlen. CCD-Zeilen und Lichtquelle können auch vertauscht sein. Die Codespur ist wie bereits in der DE-OS 196 38 912.7 (P 8782) beschrieben, mit Ausnehmungen versehen, die die hellen Felder eines mehrschrittigen Codes bilden. Der Code kann aber auch in Form von hellen und dunklen Feldern auf die Codescheibe aufgedruckt sein, wobei die Scheibe dann von oben derart schräg beleuchtet sein muß, daß die Leseeinrichtungen 5 und 6 die hellen und dunklen Felder voneinander unterscheiden können und entsprechende Ausgangssignale abgeben können.

Wie aus Fig. 1 zu erkennen, sind die beiden Leseeinrichtungen 5 und 6 und dementsprechend auch die beiden Lichtquellen 7 und 8 in einem Winkel von α versetzt oberhalb der gleiche Codespur 9 angeordnet, welche die Markierung auf den Markierungsträger 2 bildet. Für den Fall, daß die beiden Leseeinrichtungen 5 und 6 der Sensorköpfe 3 und 4 fehlerfrei arbeiten, müssen die Winkelsignale 10 (Fig. 2) am Ausgang der Leseeinrichtungen 5 und 6 und damit auch der Sensorköpfe 3 und 4 gemessene Winkelwerte ergeben, die sich um den Winkel α voneinander unterscheiden.

Mit dem Lenkstock 1 ist auch noch ein Getrieberad 10 starr gekoppelt, welches einen weiteren Markierungsträger 11 derart antreibt, daß diese sechs Umdrehungen zurücklegt, wenn das Getrieberad 11 eine einzige volle Umdrehung zurückgelegt hat. Der in der Fig. angedeutete weitere Sensor 12 kann nach dem gleichen Meßprinzip arbeiten, wie die beiden Sensorköpfe 3 und 4. Es ist aber auch vorteilhaft, hinsichtlich des Markierungsträgers 11 einen anderen, z.B. Ohm'schen Sensorkopf zu verwenden. In diesem Falle kann man auf die Lichtquelle 14 verzichten und die Leseeinrichtung ist ein einfacher Abtaster, der auf der als Ohm'sche Widerstandsspur ausgestalteten Markierungsspur 15 die winkelabhängige Spannung abtastet, die an zwei geeigneten Speisungspunkten in die Spur eingespeist werden muß, wobei selbstverständlich an dieser Stelle die Spur aufgetrennt sein muß.

Fig. 2 beschreibt das Prinzip der Verarbeitung der Winkelsignale 10 der Sensorköpfe 31 bis n. Die Sensorköpfe geben an ihren Ausgängen die Winkelsignale 10 auf die Leitungen L 31 bis Ln ab. Die ankommenden Signale werden beispielsweise zeitlich nacheinander in der Steuereinheit 18 abgerufen. Dabei können von der Steuereinheit 18 die einzelnen Sensorköpfe 31 bis n zur Abgabe ihrer Winkelinformationen aufgerufen werden, was durch einen zweiten, von der Steuereinheit 18 in Richtung der Sensorköpfe gerichteten Pfeil angedeutet ist. Die Steuereinheit vergleicht miteinander vergleichbare Meßergebnisse der Sensorköpfe, wobei bei Abweichungen auf einen Fehler bzw. auf einen fehlerhaft messenden Sensor geschlossen werden kann. Wird einer der Sensoren 31 bis n als fehlerhaft arbeitend ausgemacht, so werden dessen Meßergebnisse nicht mehr ausgewertet und ein entsprechendes Fehlersignal beispielsweise über den Datenbus 20 ausgegeben. Gleichzeitig wird über den Datenbus dann ein Ausgangssignal abgegeben, welches von einem anderen, fehlerfrei arbeitenden Sensorkopf abgeleitet ist. Der Datenbus 20 führt die verarbeiteten Ergebnisse der Lenkwinkelmessungen an eine nicht dargestellte übergeordnete Einheit, die beispielsweise eine Steer-by- Wire-Steuerung sein kann oder aber auch eine Regeleinrichtung zur Regelung der Fahrdynamik eines Kraftfahrzeugs.

Abschließend läßt sich so die Wirkungsweise des erfindungsgemäßen Systems kurz wie folgt beschreiben:

Die Information des über den Lenkwinkelsensor ermittelten Lenkradwinkels ist für verschiedene Systeme im Kraftfahrzeug erforderlich. Bezüglich der von den Systemen abhängigen erforderlichen Sicherheitsperformance wird zwischen der zuverlässigen Fehlererkennung und der permanenten Gewährleistung der korrekten Lenkwinkelsensorfunktion unterschieden.

In der vorliegenden Anmeldung ist ein Verfahren skizziert, das mittels der Verwendung mehrerer im Lenkwinkelsensor integrierter Sensorköpfe eine Erhöhung der Zuverlässigkeit des Sensorsystems erlaubt. Hiermit kann z.B. die bei "Steer by Wire" erforderliche hohe Sicherheitsanforderung (insb. jederzeit korrekte Winkelinformation) gewährleistet werden.

Entgegen der sonst üblichen Verwendung eines einzigen Sensorkopfes, besteht das System wenigstens aus zwei Einheiten. Die ermittelten Winkelinformationen werden von der ECU i.d.R. über ein Bussystem übergeordneten Systemen zur Verfügung gestellt.

Jeder einzelne Sensorkopf hat die Aufgabe der Zentraleinheit (ECU) Signale zur Verfügung zu stellen, aus denen autark die Winkelinformation berechnet werden kann. Diese jedem Sensorkopf zugeordneten Winkeldaten werden nach der parallelen Berechnung in der ECU gegenübergestellt. Stimmen sie überein, wird die Winkelinformation übergeordneten Systemen korrekt zur Verfügung gestellt. Liegt ein Fehler in einem Sensorkopf vor, so ergibt dies eine Differenz bezüglich der errechnetes Winkelinformationen. Der fehlerhafte Sensorkopf kann bei einem System mit mehr als zwei Köpfen sofort, bei einem Zweikopfsystem über die Fehlererkennungsmechanismen der Sensorköpfe lokalisiert werden. Der Vorteil dieses Prinzips ist, daß wie bisher nicht nur der Fehler erkannt und weitergeleitet wird, sondern daß über die weiteren Sensorköpfe vorläufig korrekte Winkel ausgegeben werden können (Notlaufeigenschaft).

Zur Kostenreduzierung bietet sich die Verwendung von Sensorköpfen unterschiedlicher Performance an. Es ist dabei ausreichend die geforderte Winkelauflösung mit nur einem Sensorkopf zu erreichen; für die restlichen Einheiten genügt im allgemeinen eine preisgünstige gröbere Auflösung.

Ist applikationsbedingt eine Umdrehungserkennung des Lenkrades gefordert, kann das Zählen der Lenkradumdrehungen mittels eines der verwendeten Sensorköpfe, in Verbindung mit einem geeigneten Getriebe, realisiert werden.

Werden für die einzelnen Sensorköpfe unterschiedliche physikalische Meßprinzipien zugrundegelegt, ist damit eine nochmalige Erhöhung der Zuverlässigkeit möglich. Da nämlich nicht zwingend eine auf den Funktionsausfall bezogene Korrelation zwischen den verschiedenen physikalischen Sensorprinzipien besteht, führt eine spezifische Störung nicht unbedingt zum Ausfall aller Sensorköpfe. Bei Ausfall eines Sensorprinzips, kann die Notlauffunktion von den anderen Sensorköpfen übernommen werden.

Ein beispielhafter Sensor besteht aus einer Codescheibe, deren Winkelinformation durch zwei voneinander unabhängigen, auf der CCD-Technologie basierenden Sensorköpfen abgetastet wird. Während bei korrekter Funktion die Winkeldifferenz zwischen den Ergebnissen der Sensorköpfe konstant ist, ergibt sich bei Fehlfunktion eines Sensorkopfes eine Differenzveränderung. Durch die Verwendung der CCD-Technologie sind sehr hohe Auflösungen erreichbar. Prinzipbedingt ergibt sich bei diesem Meßverfahren ein Winkelbereich von 0 - 360°. Bei "Überdrehung" des Lenkrades wiederholt sich der ermittelte Winkel gemäß der periodischen Fortsetzung.

Ergänzend zu der Feinwinkelermittlung mit der CCD-Technik, wird zur Umdrehungserkennung des Lenkrades ein dritter exemplarisch auf dem ohmschen Meßprinzip basierender Sensorkopf eingesetzt. Das Getriebe ist so dimensioniert, daß die max. mögliche Lenkraddrehung auf eine Umdrehung der Widerstand-Codescheibe transformiert wird. Bei z.B. Ausfall der gesamten optischen Sensorik kann dieser ohmsche Sensorkopf, als Notlauffunktion, die Signale der ECU zur Berechnung eines Winkels mit grober Auflösung bereitstellen.

## Patentansprüche

1. Lenkwinkelsensorsystem, bei dem wenigstens ein Sensorkopf (3, 4, 12) ein von der Drehbewegung des Lenkstocks (1) eines Fahrzeugs, insbesondere Kraftfahrzeugs, abhängiges Winkelsignal (10) einer Steuereinheit (18) zuführt, welche aus dem Winkelsignal (10) den absoluten und/oder relativen Winkelwert ermittelt und ein diesem Wert entsprechendes Ausgangssignal (20) einem übergeordneten System als Eingangssignal zur Verfügung stellt, wobei mindestens zwei Sensorköpfe (L31, L32, Ln), welche im wesentlichen parallel ihre Winkelsignale (10) der Steuereinheit zuführen und die Steuereinheit (18) zumindest ein erstes der Winkelsignale auf seine Richtigkeit überprüft und bei festgestellter Fehlerhaftigkeit den aus einem anderen Winkelsignal ermittelten Winkel dem übergeordneten System zur Verfügung stellt, dadurch gekennzeichnet, daß mindestens zwei Sensoren (2, 3, 4, 9) vorgesehen sind, die jeweils einen ortsfesten Sensorkopf (3, 4) und einen mit dem Lenkstock (1) gekoppelten, drehenden, Markierungen (9) besitzenden Markierungsträger (2) aufweisen, wobei die Sensorköpfe (3, 4) mit Detektoren (5, 6) versehen sind, welche in Abhängigkeit von der Drehstellung bzw. Drehlage durch die Auswertung der detektierten Markierung (9) auf dem Markierungsträger ihre Lenkwinkelsignale (10) ausgeben und daß mindestens zwei Sensorköpfe (3, 4) im Winkel α versetzt der gleichen Markierungsspur (9) zugeordnet sind, daß die Winkelsignale (10) der Sensorköpfe (L31, L32, Ln) den festgestellten Drehwinkel mit unterschiedlicher Genauigkeit angeben und daß das erste Winkelsignal, das die größere Winkelmeßgenauigkeit beinhaltende Signal ist.

2. Lenkwinkelsensorsystem nach Anspruch 1, dadurch gekennzeichnet, daß zwei Sensorköpfe (3, 4) vorgesehen sind, daß die Steuereinrichtung (18) beide Winkelsignale (10) auf ihre Richtigkeit überprüft und bei festgestellter Fehlerhaftigkeit des ersten Winkelsignals den aus dem zweiten Winkelsignal (10) ermittelten Winkelwert dem übergeordneten System zur Verfügung stellt.

3. Lenkwinkelsensorsystem nach Anspruch 1 oder 2, dadurch gekennzeichnet, daß die Sensorköpfe (3, 4, 12, L31, L32, Ln) die Drehbewegung nach unterschiedlichen physikalischen Meßprinzipien feststellen.

4. Lenkwinkelsensorsystem nach einem der vorangegangenen Ansprüche, dadurch gekennzeichnet, daß zur Bestimmung der Fehlerhaftigkeit der Winkelsignale (10) der Signalinhalt zumindest zweier Sensorköpfe (3, 4, 12, L31, L32, Ln) in der Steuereinheit (18) ausgewertet wird.

5. Lenkwinkelsensorsystem nach einem der vorangegangenen Ansprüche, dadurch gekennzeichnet, daß die Sensorköpfe (3, 4) in Verbindung mit den zugeordneten Markierungen (9) nach einem optischen und/oder magnetischen und/oder induktiven und/oder ohmschen und/oder kapazitiven Meßverfahren arbeiten.

6. Lenkwinkelsensorsystem nach einem der vorangegangenen Ansprüche, dadurch gekennzeichnet, daß mindestens zwei Sensorköpfe (3, 4) nach dem gleichen physikalischen Meßprinzip arbeiten und deren zugehörige Markierungen (9) in Form von kreisförmig angeordneten Markierungsspuren auf dem gleichen Markierungsträger (2) angeordnet sind.

7. Lenkwinkelsensorsystem nach einem der vorangegangenen Ansprüche, dadurch gekennzeichnet, daß mindestens zwei Sensorköpfe (3, 4) nach einem optischen Meßprinzip arbeiten, wobei die Sensorköpfe (3, 4) mit jeweils einer CCD-Zeile versehen sind.

8. Lenkwinkelsensorsystem nach einem der vorangegangenen Ansprüche, dadurch gekennzeichnet, daß die kreisförmigen Markierungsspuren (9) derart mit absoluten Winkelwerten codiert sind, daß Winkelwerte zwischen 0° und 360° ablesbar sind und daß zumindest eine weitere Markierungsspur (15) vorzugsweise auf einem weiteren Markierungsträger (11) vorgesehen ist, welche aufgrund einer gegenüber den anderen Markierungsträgern (2) herabgestuften Umdrehungsgeschwindigkeit oder einander verschachtelter vorzugsweise spiralförmig miteinander verbundener Markierungsspuren die Ablesung absoluter Winkelwerte bis zu einem mehrfachen Winkelbetrag des von den anderen Markierungsspuren ablesbaren Winkelbetrags (360°) gestatten.

9. Lenkwinkelsensorsystem nach Anspruch 8, dadurch gekennzeichnet, daß ein die weitere Markierungsspur tragender Markierungsträger (11) in seiner Umdrehungsgeschwindigkeit mittels eines Getriebes (10, 11) auf insbesondere 1/6 der Umdrehungsgeschwindigkeit eines oder mehrerer anderer Markierungsträger (2) herabgestuft ist und die Markierung (15) aus insbesondere einer Widerstandsspur für einen elektrischen Strom besteht, die durch den weiteren Sensorkopf (12) abgetastet wird.

## Claims

1. Steering angle sensor system, in which at least one sensor head (3, 4, 12) supplies an angle signal (10) which is dependent on the rotation of the steering column (1) of a vehicle, in particular motor vehicle, to a control unit (18), which determines the absolute and/or relative angle value from the angle signal (10) and supplies an output signal (20) corresponding to this value to a master system as an input signal, wherein at least two sensor heads (L31, L32, Ln), which supply their angle signals (10), substantially in parallel, to the control unit and the control unit (18) checks at least a first of the angle signals for its correctness and, if faultiness is detected, supplies the angle determined from another angle signal to the master system, characterised in that at least two sensors (2, 3, 4, 9) are provided which each have a stationary sensor head (3, 4) and a rotating marking carrier (2) coupled to the steering column (1) and having markings (9), wherein the sensor heads (3, 4) are provided with detectors (5, 6) which output their steering angle signals (10) as a function of the rotational point or rotational position by evaluating the detected marking (9) on the marking carrier and in that at least two sensor heads (3, 4) offset at the angle α are allocated to the same marking track (9), in that the angle signals (10) of the sensor heads (L31, L32, Ln) display the detected angle of rotation with varying accuracy and in that the first angle signal is the signal containing the greater angle measuring accuracy.

2. Steering angle sensor system according to claim 1, characterised in that two sensor heads (3, 4) are provided, in that the control device (18) checks the two angle signals (10) for their correctness and when the faultiness of the first angle signal is detected, supplies the angle value determined from the second angle signal (10) to the master system.

3. Steering angle sensor system according to claim 1 or 2, characterised in that the sensor heads (3, 4, 12, L31, L32, Ln) detect the rotation according to various physical measuring principles.

4. Steering angle sensor system according to one of the preceding claims, characterised in that the signal content of at least two sensor heads (3, 4, 12, L31, L32, Ln) is evaluated in the control unit (18) to determine the faultiness of the angle signals (10).

5. Steering angle sensor system according to one of the preceding claims, characterised in that the sensor heads (3, 4) operate in conjunction with the allocated markings (9) by optical and/or magnetic and/or inductive and/or ohmic and/or capacitative measuring processes.

6. Steering angle sensor system according to one of the preceding claims, characterised in that at least two sensor heads (3, 4) operate according to the same physical measuring principle and their associated markings (9) are arranged in the form of circularly arranged marking tracks on the same marking carrier (2).

7. Steering angle sensor system according to one of the preceding claims, characterised in that at least two sensor heads (3, 4) operate according to an optical measuring principle, wherein the sensor heads (3, 4) are provided with a respective CCD line.

8. Steering angle sensor system according to one of the preceding claims, characterised in that the circular marking tracks (9) are coded with absolute angle values in such a way that angle values between 0° and 360° can be read off and in that at least one further marking track (15) is provided preferably on a further marking carrier (11), which allow absolute angle values to be read off up to a multiple angle amount of the angle amount (360°) which can be read off from the other marking tracks, due to a rotational speed which is stepped down relative to the other marking carriers (2) or due to marking tracks which are mutually nesting and preferably connected to one another helically.

9. Steering angle sensor system according to claim 8, characterised in that a marking carrier (11) carrying the further marking track is stepped down to, in particular, 1/6 of the rotational speed of one or more other marking carriers (2) by means of a gear (10, 11) and the marking (15) consists of, in particular, a resistance track for an electric current which is scanned by the further sensor head (12).

## Revendications

1. Système capteur d'angle de braquage, dans lequel au moins une tête de capteur (3, 4, 12) achemine un signal angulaire (10) fonction du déplacement en rotation de la colonne de direction (1) d'un véhicule, en particulier d'un véhicule automobile, à une unité de commande (18) , qui détermine à partir du signal angulaire (10) la valeur angulaire absolue et/ou la valeur angulaire relative et qui met un signal de sortie (20) correspondant à cette valeur à disposition d'un système principal comme signal d'entrée, au moins deux têtes de capteur (L31, L32, Ln) acheminent sensiblement en parallèle leurs signaux angulaires (10) à l'unité de commande et l'unité de commande (18) contrôle au moins, un premier des signaux angulaires pour vérifier s'il est correct et, lorsqu'une défaillance a été détectée, met à disposition du système principal l'angle tiré d'un autre signal angulaire, caractérisé en ce qu'il est prévu au moins deux capteurs (2, 3, 4, 9), qui présentent respectivement une tête de capteur fixe (3, 4) et un support de repères (2) portant des repères, rotatif, couplé à la colonne de direction (1), les têtes de capteur (3, 4) étant pourvues de détecteurs (5, 6) , qui délivrent leurs signaux d'angle de braquage (10) en fonction de la position de rotation ou de la position de rotation par exploitation du repère détecté (9) sur le support de repérage, en ce qu'au moins deux têtes de capteur (3, 4) sont affectées, avec un décalage d'un angle α, à la même piste de repérage (9), en ce que les signaux angulaires (10) des têtes de capteur (L31, L32, Ln) indiquent l'angle de rotation détecté avec une précision différente et en ce que le premier signal angulaire est le signal contenant la plus grande précision de mesure angulaire.

2. Système capteur d'angle de braquage selon la revendication 1, caractérisé en ce qu'il est prévu deux têtes de capteur (3, 4), en ce que le dispositif de commande (18) contrôle les deux signaux angulaires (10) pour vérifier s'ils sont corrects et, dans le cas où l'on détecte une défaillance du premier signal angulaire, met la valeur angulaire tirée du second signal angulaire (10) à disposition du système principal.

3. Système capteur d'angle de braquage selon la revendication 1 ou 2, caractérisé en ce que les têtes de capteur (3, 4, 12, L31, L32, Ln) détectent le mouvement en rotation selon différents principes de mesure physiques.

4. Système capteur d'angle de braquage selon l'une quelconque des revendications précédentes, caractérisé en ce que le contenu en signaux d'au moins deux têtes de capteur (3, 4, 12, L31, L32, Ln) est exploité dans l'unité de commande (18) pour déterminer la défaillance des signaux angulaires.

5. Système capteur d'angle de braquage selon l'une quelconque des revendications précédentes, caractérisé en ce que les têtes de capteur (3, 4) travaillent en liaison avec les repères affectés (9) selon un procédé de mesure optique et/ou magnétique et/ou inductif et/ou ohmique et/ou capacitif.

6. Système capteur d'angle de braquage selon l'une quelconque des revendications précédentes, caractérisé en ce qu'au moins deux têtes de capteur (3, 4) opèrent sur le même principe de mesure physique et leurs repères correspondants (9) sont disposés sous la forme de pistes de repérage agencées en cercle sur le même support de repères (2).

7. Système capteur d'angle de braquage selon l'une quelconque des revendications précédentes, caractérisé en ce qu'au moins deux têtes de capteur (3, 4) travaillent selon un principe de mesure optique, les têtes de capteur (3, 4) étant pourvues respectivement d'une ligne CCD.

8. Système capteur d'angle de braquage selon l'une quelconque des revendications précédentes, caractérisé en ce que les pistes de repérage circulaires (9) sont codées par des valeurs angulaires absolues de sorte que les valeurs angulaires puissent être lues entre 0 et 360° et en ce qu'il est prévu au moins une autre piste de repérage (15), de préférence sur un autre support de repères (11) qui permet, en raison d'une vitesse de rotation réduite par rapport aux autres supports de repères ou de pistes de repérage mutuellement intercalées ou mutuellement reliées en spirale, la lecture de valeurs angulaires absolues jusqu'à un module angulaire multiple de la contribution angulaire lisible par les autres pistes de repérage (360°).

9. Système capteur d'angle de braquage selon la revendication 8, caractérisé en ce qu'un support de repères (11) portant l'autre piste de repérage voit sa vitesse réduite, en particulier à 1/6 de la vitesse de rotation d'un ou plusieurs autres supports de repères (2) , au moyen d'en engrenage (10,11) et le repère (15) est constitué en particulier d'une piste de résistance pour un courant électrique, qui est explorée par l'autre tête de capteur (12).
